# FASCICULE DE BREVET EUROPEEN

(11) **EP 3 714 642 B1**
(45) Date de publication et mention de la délivrance du brevet: **23.03.2022**
(21) Numéro de dépôt: 18800212.5
(22) Date de dépôt: 16.11.2018
(51) Int. Cl.: H04W 52/14, H04W 52/36, H04W 52/24, H04W 52/28

(54) **PROCEDE DE GESTION D'UNE PUISSANCE D'EMISSION OPTIMALE D'UN POINT D'ACCES WI-FI, ET LE POINT D'ACCES WI-FI CORRESPONDANT**
VERFAHREN ZUR VERWALTUNG EINER OPTIMALEN SENDELEISTUNG EINES WI-FI-ZUGANGSPUNKTES UND ENTSPRECHENDER WI-FI-ZUGANGSPUNKT
METHOD FOR MANAGING AN OPTIMUM EMISSION POWER OF A WI-FI ACCESS POINT AND CORRESPONDING WI-FI ACCESS POINT

(30) Priorité: 20.11.2017 FR 1760913
(43) Date de publication de la demande: 30.09.2020
(73) Titulaire: Sagemcom Broadband SAS, 92500 Rueil-Malmaison (FR)
(72) Inventeur: LEFEVERE, Philippe, 92500 Rueil Malmaison (FR); THOUVENIN, Didier, 92500 Rueil Malmaison (FR)
(74) Mandataire: Cabinet Le Guen Maillet
(86) Numéro de dépôt international: PCT/EP2018/081529
(87) Numéro de publication internationale: WO 2019/096980

(56) Documents cités:
- WO-A2-03/039024
- US-A1- 2004 202 243
- US-A1- 2017 150 455

## Description

La présente invention concerne le domaine des réseaux de communications. L'invention concerne plus particulièrement le domaine des réseaux de communications sans fil « Wi-Fi » (pour « Wireless Fidelity » en anglais), c'est-à-dire conforme à l'un des standards édictés par le groupe IEEE 802.11 (« Institute of Electrical and Electronics Engineers » en anglais).

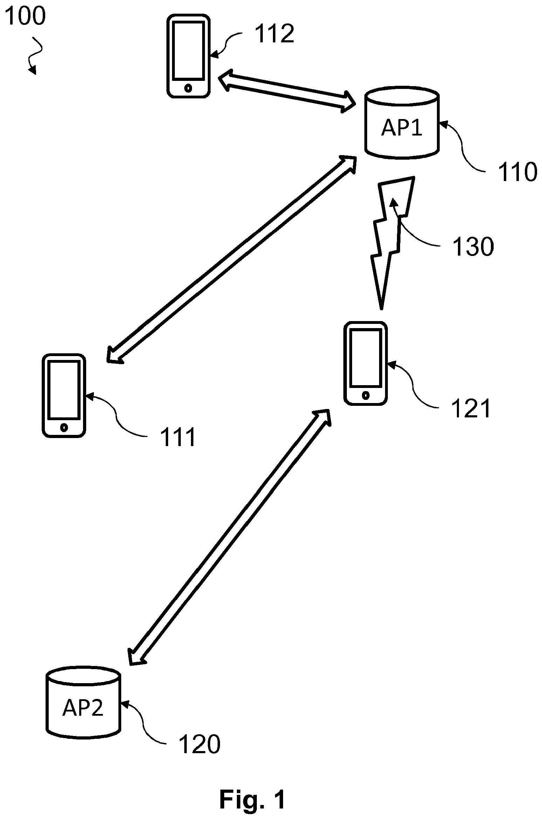

La Fig. 1 illustre schématiquement un réseau de communication Wi-Fi 100 comprenant des points d'accès Wi-Fi AP1 110 et AP2 120 et des dispositifs électroniques 111, 112 et 121 connectés à ces points d'accès Wi-Fi. Dans l'exemple de la Fig. 1, les dispositifs électroniques 111 et 112 sont connectés au point d'accès Wi-Fi AP1 110, le dispositif électronique 121 est connecté au point d'accès Wi-Fi AP2 120.

Les points d'accès Wi-Fi AP1 110 et AP2 120 (« Access Point » en anglais) sont typiquement des routeurs comprenant un module radio WiFi. Le point d'accès Wi-Fi AP1 110 ou AP2 120 peut aussi être une « box » ou « gateway » (en anglais dans le texte, « boîte » en français), ou bien une « STB »(« set-top box » en anglais, « décodeur TV » en français), fourni par un fournisseur d'accès à Internet (ou « FAI »). Une « box » comprend typiquement un modem aDSL (« Asymmetric Digital Subscriber Line » en anglais) ou dit « fibre optique », des fonctionnalités de routage et un module radio WiFi. Un décodeur TV peut aussi comprendre un module radio WiFi afin de permettre une connexion sans fil de dispositifs électroniques au décodeur TV. Ainsi, un module radio WiFi permet de connecter des dispositifs électroniques, tels les dispositifs électroniques 111, 112 et 121 aux points d'accès Wi-Fi AP1 110 et AP2 120. Les dispositifs électroniques 111, 112 et 121 sont typiquement des smartphones (« téléphone intelligent » en français), des tablettes, des ordinateurs portables, ou tout dispositif électronique comprenant un module radio WiFi. Le dispositif électronique 111, 112 ou 121 peut être un décodeur TV connecté à un point d'accès Wi-Fi tel une « box » d'un fournisseur d'accès à Internet.

Il existe une fonctionnalité permettant de configurer, ou régler, la puissance d'émission du signal radio WiFi d'un point d'accès Wi-Fi. Cette fonctionnalité est toutefois peu mise en œuvre dans les point d'accès Wi-Fi, et bien souvent, lorsqu'elle est mise en œuvre, elle n'est pas utilisée par les utilisateurs. En effet, pour des raisons de performance, il est plus simple de laisser un point d'accès Wi-Fi émettre à sa puissance d'émission maximale. Cela permet en effet d'obtenir une couverture radio maximale ou d'obtenir un débit de transmission de données maximal.

Il est des cas cependant où il serait souhaitable de réduire, ou au moins d'optimiser, la puissance d'émission d'un point d'accès Wi-Fi tel les point d'accès Wi-Fi AP1 110 ou AP2 120.

Tout d'abord, de façon générale, il serait souhaitable de réduire au maximum les émissions radios de tout équipement radio afin de réduire une gêne pour des personnes se déclarant électro-sensibles. Un exemple est illustré dans le document WO 03/039024.

Ensuite, comme illustré dans la Fig. 1, le point d'accès Wi-Fi AP1 110, lorsqu'il émet, est source d'interférences 130 pour la connexion Wi-Fi existante entre le point d'accès Wi-Fi AP2 120 et le dispositif électronique 121. Réduire la puissance d'émission du point d'accès Wi-Fi AP1 110 permettrait donc de réduire les interférences 130, et donc d'améliorer la qualité de connexion entre le dispositif électronique 121 et le point d'accès Wi-Fi AP2 120. Mais dans un même temps, réduire la puissance d'émission du point d'accès Wi-Fi AP1 110, ou AP2 120, a pour conséquence de réduire la qualité de la connexion entre le point d'accès Wi-Fi AP1 110, ou AP2 120, et les dispositifs électroniques connectés à ce point d'accès Wi-Fi. En effet, la qualité de connexion, dans le sens point d'accès Wi-Fi vers dispositif électronique, est intimement liée au rapport signal sur bruit de la connexion radio, et donc à la puissance d'émission du signal radio Wi-Fi par le point d'accès Wi-Fi. Il n'est donc pas possible de réduire la puissance d'émission d'un point d'accès Wi-Fi impunément sans à un moment perturber la qualité des connexions Wi-Fi des dispositifs électroniques connectés à ce point d'accès Wi-Fi. Dit autrement, lorsque plusieurs points d'accès Wi-Fi coexistent, chaque point d'accès Wi-Fi est potentiellement une source d'interférences pour les autres points d'accès Wi-Fi. En même temps, réduire une puissance d'émission d'un point d'accès Wi-Fi afin de limiter les interférences peut dégrader la qualité des connexions des dispositifs électroniques connectés à ce même point d'accès Wi-Fi.

Il est donc nécessaire de proposer un procédé permettant de pallier ces inconvénients.

L'invention concerne un procédé de gestion d'une puissance d'émission optimale d'un point d'accès Wi-Fi, tel que défini dans la revendication 1.

Selon un mode de réalisation complémentaire de l'invention, une pluralité de dispositifs électroniques étant connectée au point d'accès Wi-Fi, l'étape de déterminer une valeur minimale de puissance d'émission du point d'accès étant réalisée pour chaque dispositif électronique, le procédé comprend une étape ultérieure de déterminer une valeur maximale de la puissance d'émission parmi la pluralité de valeurs minimales déterminées, cette valeur maximale permettant alors d'obtenir, pour chaque dispositif électronique connecté au point d'accès Wi-Fi, une valeur de l'indicateur de qualité associé à sa connexion au point d'accès Wi-Fi supérieure à la valeur minimale, la puissance d'émission optimale du point d'accès Wi-Fi étant égale à la valeur maximale de puissance d'émission déterminée.

Selon un mode de réalisation complémentaire de l'invention, le procédé comprend une étape de sélection, parmi la pluralité des dispositifs électroniques, des dispositifs électroniques pour lesquels les étapes du procédé sont exécutées.

Selon un mode de réalisation complémentaire de l'invention, au moins un dispositif électronique étant associé à une pluralité de positions, l'étape de déterminer une valeur minimale de puissance d'émission du point d'accès permettant d'obtenir, pour le dispositif électronique, une valeur de l'indicateur de qualité associé à sa connexion au point d'accès Wi-Fi supérieure à la valeur minimale, est réalisée pour chacune des positions associées au dispositif électronique.

Selon un mode de réalisation complémentaire de l'invention, l'étape de déterminer la valeur minimale de puissance d'émission comprend les étapes de :
- configurer la puissance d'émission du point d'accès Wi-Fi à une valeur de puissance d'émission actuelle, la valeur de puissance d'émission actuelle étant égale à une valeur de puissance d'émission maximale,
- déterminer, pour au moins le dispositif électronique connecté au point d'accès Wi-Fi, une valeur de l'indicateur de qualité associé à sa connexion au point d'accès Wi-Fi,
- si la valeur de l'indicateur de qualité déterminée est supérieure à la valeur minimale de l'indicateur de qualité déterminée précédemment, alors configurer la puissance d'émission actuelle du point d'accès Wi-Fi en la diminuant d'une valeur prédéterminée et retourner à l'étape précédente afin de déterminer une nouvelle valeur de l'indicateur de qualité,
- sinon, si la valeur de l'indicateur de qualité déterminée est inférieure à la valeur minimale de l'indicateur de qualité déterminée précédemment, alors déterminer la valeur minimale de puissance d'émission du point d'accès Wi-Fi comme étant égale à la puissance d'émission actuelle augmentée de la valeur prédéterminée.

L'invention concerne également un point d'accès Wi-Fi tel que défini dans la revendication 5.

Selon un mode de réalisation complémentaire de l'invention, une pluralité de dispositifs électroniques étant connectée au point d'accès Wi-Fi, le point d'accès Wi-Fi est adapté pour :
- déterminer une valeur minimale de puissance d'émission du point d'accès pour chaque dispositif électronique,
- déterminer une valeur maximale de la puissance d'émission parmi la pluralité de valeurs minimales déterminées, cette valeur maximale permettant alors d'obtenir, pour chaque dispositif électronique connecté au point d'accès Wi-Fi, une valeur de l'indicateur de qualité associé à sa connexion au point d'accès Wi-Fi supérieure à la valeur minimale, la puissance d'émission optimale du point d'accès Wi-Fi étant égale à la valeur maximale de puissance d'émission déterminée.

Selon un mode de réalisation complémentaire de l'invention, au moins un dispositif électronique étant associé à une pluralité de positions, le point d'accès Wi-Fi est adapté pour déterminer, pour chaque position du dispositif électronique, une valeur minimale de puissance d'émission permettant d'obtenir, pour le dispositif électronique, une valeur de l'indicateur de qualité associé à sa connexion au point d'accès Wi-Fi supérieure à la valeur minimale.

Selon un mode de réalisation complémentaire de l'invention, au moins un dispositif électronique connecté au point d'accès Wi-Fi étant associé à une pluralité de positions, le point d'accès Wi-Fi est adapté pour déterminer, pour chacune des positions associées au dispositif électronique, une valeur minimale de puissance d'émission permettant d'obtenir, pour le dispositif électronique, une valeur de l'indicateur de qualité associé à sa connexion au point d'accès Wi-Fi supérieure à la valeur minimale.

Selon un mode de réalisation complémentaire de l'invention, le point d'accès Wi-Fi est adapté, afin de déterminer la valeur minimale de puissance d'émission, pour :
- configurer la puissance d'émission à une valeur de puissance d'émission actuelle, la valeur de puissance d'émission actuelle étant égale à une valeur de puissance d'émission maximale,
- déterminer, pour au moins le dispositif électronique connecté, une valeur de l'indicateur de qualité associé à sa connexion au point d'accès Wi-Fi,
- si la valeur de l'indicateur de qualité déterminée est supérieure à la valeur minimale de l'indicateur de qualité déterminée précédemment, alors configurer la puissance d'émission actuelle en la diminuant d'une valeur prédéterminée et retourner à l'étape précédente afin de déterminer une nouvelle valeur de l'indicateur de qualité,
- sinon, si la valeur de l'indicateur de qualité déterminée est inférieure à la valeur minimale de l'indicateur de qualité déterminée précédemment, alors déterminer la valeur minimale de puissance d'émission comme étant égale à la puissance d'émission actuelle augmentée de la valeur prédéterminée.

L'invention concerne également un programme d'ordinateur tel que défini dans la revendication 8.

L'invention concerne également un support d'enregistrement sur lequel est stocké le précédent programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de communication Wi-Fi comprenant des points d'accès Wi-Fi et des dispositifs électroniques connectés à ces points d'accès Wi-Fi,
- la Fig. 2 illustre schématiquement l'architecture matérielle d'un point d'accès Wi-Fi, le point d'accès Wi-Fi étant adapté pour gérer une puissance d'émission optimale d'un point d'accès Wi-Fi, selon un mode de réalisation de l'invention,
- la Fig. 3 illustre schématiquement un procédé de gestion d'une puissance d'émission optimale d'un point d'accès Wi-Fi selon un mode de réalisation de l'invention.

L'invention a pour principe de réduire une puissance d'émission d'un point d'accès Wi-Fi tout en vérifiant en même temps qu'une qualité de service d'une connexion entre le point d'accès Wi-Fi et un dispositif électronique est préservée. Ainsi, lors d'une phase de test, la puissance d'émission d'un point d'accès Wi-Fi est progressivement diminuée, le point d'accès Wi-Fi vérifiant à chaque fois qu'une qualité de service cible est maintenue. Ainsi, le point d'accès Wi-Fi peut déterminer une puissance d'émission optimale permettant d'un côté de réduire la puissance d'émission, et d'un autre côté de maintenir une qualité de service prédéterminée. Ce principe est expliqué plus en détails ci-après.

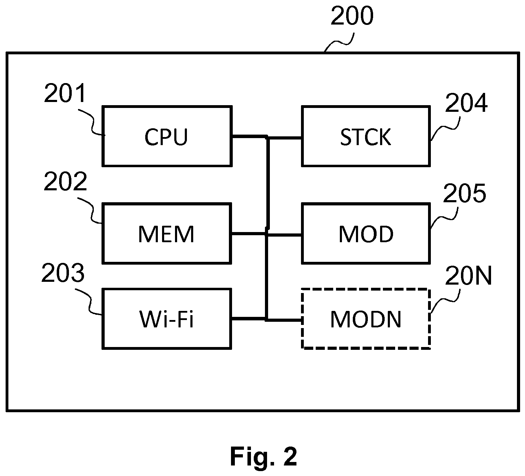

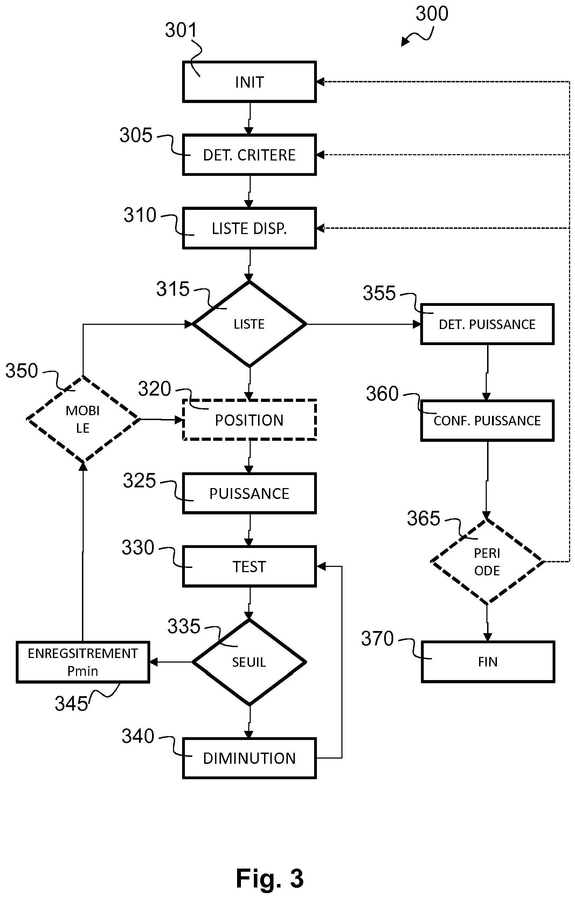

La Fig. 2 illustre schématiquement l'architecture matérielle d'un point d'accès Wi-Fi 200, le point d'accès Wi-Fi 200 étant adapté pour gérer une puissance d'émission optimale d'un point d'accès Wi-Fi, selon un mode de réalisation de l'invention. Le point d'accès Wi-Fi décrit ci-après est typiquement un point d'accès Wi-Fi similaire au point d'accès Wi-Fi AP1 110 ou AP2 120, lorsque le point d'accès Wi-Fi AP1 110 ou AP2 120 est de plus adapté pour mettre en œuvre le procédé de gestion d'une puissance d'émission optimale d'un point d'accès Wi-Fi, selon un mode de réalisation de l'invention, par exemple tel qu'illustré dans la Fig. 3.

Le point d'accès Wi-Fi 200 comporte, reliés par un bus de communication : un processeur ou CPU (« Central Processing Unit » en anglais) 201 ; une mémoire MEM 202 de type RAM (« Random Access Memory » en anglais) et/ou ROM (« Read Only Memory » en anglais), un module radio Wi-Fi 203, un module de stockage STCK 204 de type stockage interne et possiblement d'autres modules 205 à 20N de différentes natures. Le module de stockage STCK 204 peut être de type disque dur HDD (« Hard Disk Drive » en anglais) ou SSD (« Solid-State Drive » en anglais), ou de type lecteur de support de stockage externe, tel un lecteur de cartes SD (« Secure Digital » en anglais). Le processeur CPU 201 peut enregistrer des données, ou informations, dans la mémoire MEM 202 ou dans le module de stockage STCK 204. Le processeur CPU 201 peut lire des données enregistrées dans la mémoire MEM 202 ou dans le module de stockage STCK 204. Ces données peuvent correspondre à des paramètres de configuration, des instructions, des paramètres de qualités liés à des messages reçus ou à des informations ou instructions reçues par exemple dans un message reçu via le module radio Wi-Fi 203 (ou bien via un autre module de communication 20N permettant une connexion à un réseau de communication, par exemple un module réseau Ethernet ou aDSL). Le module radio Wi-Fi 203 permet la connexion du dispositif électronique 300 au réseau 100 de communication maillé via un média partagé, par exemple un réseau électrique. Le module radio Wi-Fi 203 peut permettre la connexion du point d'accès Wi-Fi 200 avec un dispositif électronique tel qu'un smartphone, une tablette, un décodeur TV ou plus globalement tout dispositif électronique comprenant un module radio Wi-Fi. Le module radio Wi-Fi 203 permet au point d'accès Wi-Fi 200 d'envoyer, respectivement de recevoir, des messages à destination de, respectivement en provenance de, un ou plusieurs dispositifs électroniques connectés au point d'accès Wi-Fi 200. Typiquement, le point d'accès Wi-Fi 200 gère un paramètre dit « Service Set Identifier » (en anglais, ci-après SSID) permettant d'identifier un réseau de communication sans-fil créé par le point d'accès Wi-Fi 200. On dit ainsi communément qu'un dispositif électronique désirant se connecter au point d'accès Wi-Fi 200, se connecte au réseau Wi-Fi identifié par le SSID du point d'accès Wi-Fi 200. Possiblement, le point d'accès Wi-Fi 200 est adapté pour mettre en œuvre un procédé d'authentification, par exemple de type WPA2 (« Wi-Fi Protected Access » en anglais).

Le processeur CPU 201 est capable d'exécuter des instructions chargées dans la mémoire MEM 202, par exemple à partir du module de stockage STCK 204 ou d'un réseau de communication via un module réseau 20N. Lorsque le point d'accès Wi-Fi 200 est mis sous tension, le processeur CPU 201 est capable de lire de la mémoire MEM 202 des instructions et de les exécuter. Ces instructions forment un programme d'ordinateur causant la mise en œuvre, par le processeur CPU 201, de tout ou partie des procédés et étapes décrits ci-après, particulièrement dans la description de la Fig. 3. Ainsi, tout ou partie des procédés et étapes décrits ci-après peut être implémenté sous forme logicielle par exécution d'un ensemble d'instructions par une machine programmable, telle qu'un DSP (« Digital Signal Processor » en anglais) ou un microcontrôleur. Tout ou partie des procédés et étapes décrits ici peuvent aussi être implémentés sous forme matérielle par une machine ou un composant dédié, tel qu'un FPGA (« Field-Programmable Gâte Array » en anglais) ou un ASIC (« Application-Specific Integrated Circuit » en anglais). Les fonctions du point d'accès Wi-Fi 200 peuvent être intégrées dans un point d'accès Wi-Fi existant, ou tout dispositif électronique comprenant un module radio Wi-Fi, par mise à jour d'un logiciel (mise à jour du « firmware » en anglais).

La Fig. 3 illustre schématiquement un procédé 300 de gestion d'une puissance d'émission optimale d'un point d'accès Wi-Fi, par exemple similaire au point d'accès Wi-Fi 200, selon un mode de réalisation de l'invention.

Les étapes du procédé 300 peuvent être exécutées par le CPU 201 du point d'accès Wi-Fi 200.

Dans une première étape 301, le procédé 300 est initié. Cette étape 301 peut être exécutée à la suite de l'action d'un utilisateur ou automatiquement. L'étape 301 peut être exécutée automatiquement, par exemple, comme décrit ci-après, parce que le procédé 300 est périodiquement exécuté. Alternativement, l'étape 301 peut être déclenchée suite à un évènement particulier. Par exemple, cet évènement peut être une détection, par le point d'accès Wi-Fi 200, de la présence d'un dispositif électronique connecté particulier, ou bien la réception d'un message, en provenance d'un dispositif électronique connecté particulier, comprenant une demande d'exécution du procédé 300. Ainsi, le procédé 300 peut être déclenché à distance par un utilisateur d'un dispositif électronique connecté au point d'accès Wi-Fi 200. Un dispositif électronique particulier peut envoyer un message d'initialisation du procédé 300 lorsque lui-même détecte un événement, par exemple un changement de sa position ou localisation.

Selon un mode de réalisation complémentaire, un point d'accès Wi-Fi, par exemple le point d'accès Wi-Fi AP1 110 adapté, c'est-à-dire modifié, pour mettre en œuvre le procédé 300, peut être en communication avec un autre point d'accès Wi-Fi, par exemple le point d'accès Wi-Fi AP2 120 adapté, c'est-à-dire modifié, pour mettre en œuvre le procédé 300. Ainsi, les deux points d'accès Wi-Fi AP1 110 et AP2 120, adaptés pour mettre en œuvre le procédé 300, peuvent se synchroniser afin de mettre en œuvre le procédé 300 de manière coordonnée.

Dans une étape suivante 305, le point d'accès Wi-Fi 200 détermine une valeur minimale d'un indicateur de qualité associé à une connexion d'un dispositif électronique au point d'accès Wi-Fi. Selon le mode de réalisation de l'invention, l'indicateur de qualité utilisé peut être différent. L'indicateur de qualité peut ainsi être :
- un rapport signal à bruit d'une connexion entre le point d'accès Wi-Fi et un dispositif électronique,
- un paramètre technique associé à une connexion entre le point d'accès Wi-Fi et un dispositif électronique, par exemple le paramètre « Modulation and Coding Scheme » (MCS) négocié lors de la connexion entre un dispositif électronique et le point d'accès Wi-Fi,
- un débit de transmission de données associé à la connexion entre le point d'accès Wi-Fi et un dispositif électronique.

Dans l'hypothèse où l'indicateur de qualité est un débit de transmission de données, et puisqu'il s'agit au final de configurer la puissance d'émission du point d'accès Wi-Fi, l'indicateur de qualité correspond au débit de transmission de données dans le sens point d'accès Wi-Fi vers le dispositif électronique, c'est-à-dire dans le sens dit « descendant » (sens « download » en anglais). Cet indicateur de qualité peut nécessiter de recourir à une étape de test du débit descendant entre un dispositif électronique et le point d'accès Wi-Fi pour être déterminé. L'étape 305 ne sert qu'à fixer une valeur minimale de l'indicateur de qualité, valeur qui sert de valeur seuil, c'est-à-dire que la puissance d'émission du point d'accès Wi-Fi est appelée à être diminuée tout en s'assurant que l'indicateur de qualité d'une connexion entre un dispositif électronique et le point d'accès Wi-Fi reste supérieur à la valeur minimale déterminée lors de l'étape 305. En cas de présence d'une pluralité de dispositifs électroniques, la puissance d'émission du point d'accès Wi-Fi est appelée à être diminuée tout en s'assurant que l'indicateur de qualité de la connexion entre chaque dispositif électronique sélectionné et le point d'accès Wi-Fi reste supérieur à la valeur minimale déterminée lors de l'étape 305.

Afin de déterminer la valeur minimale de l'indicateur de qualité, le point d'accès Wi-Fi peut intégrer par exemple un serveur web permettant à un utilisateur d'un dispositif électronique de se connecter pour avoir accès à une page de configuration de la valeur minimale de l'indicateur de qualité. L'utilisateur peut aussi installer une application sur un dispositif électronique connecté au point d'accès Wi-Fi 200, par exemple téléchargée sur un magasin d'applications type « Google Play^{™} », l'application permettant de configurer à distance le point d'accès Wi-Fi 200.

Le choix de la valeur minimale de l'indicateur de qualité peut être fait par l'utilisateur en fonction de valeurs prédéterminées, chaque valeur prédéterminée étant associée à un service possible à travers la connexion au point d'accès Wi-Fi 200. Ainsi, l'utilisateur peut indiquer quel niveau de service il souhaite pouvoir utiliser, par exemple « voix sur IP », « vidéo SD » (SD pour « Standard Définition » en anglais, soit Définition Standard) ou encore « video HD » (HD pour « High Définition » en anglais, soit Haute définition), chaque niveau de service étant associé à un débit minimal de transmission dans le sens descendant pour être utilisé confortablement.

Dans une étape suivante 310, le point d'accès Wi-Fi détermine une liste de dispositifs électroniques pour lesquels les étapes ci-après du procédé 300 seront exécutées. Dit autrement, dans cette étape 310, le point d'accès Wi-Fi sélectionne les dispositifs électroniques pour lesquels le respect de la valeur minimale de l'indicateur de qualité précédemment déterminée est vérifié.

Selon un mode de réalisation alternatif de l'invention, le point d'accès Wi-Fi 200 réalise les étapes ci-après avec tous les dispositifs électroniques connectés au point d'accès Wi-Fi 200.

Selon un autre mode de réalisation de l'invention, le procédé 300 peut comprendre une étape intermédiaire (non représentée) permettant à un utilisateur de sélectionner, manuellement ou selon des critères prédéfinis, les dispositifs électroniques pour lesquels les étapes ci-après doivent être réalisées. L'application installée sur un dispositif électronique peut comprendre une interface permettant ce choix.

Selon un autre mode de réalisation de l'invention, le point d'accès Wi-Fi 200 détermine automatiquement, selon des critères prédéfinis, les dispositifs électroniques connectés pour lesquels les étapes ci-après doivent être réalisées. Le point d'accès Wi-Fi 200 peut ainsi sélectionner les dispositifs électroniques selon l'adresse MAC (« Media Access Control » en anglais), l'adresse IP (« Internet Protocol » en anglais) ou bien un nom de type « DNS » (« Domain Name Server » en anglais) associé au dispositif électronique. La ou les adresses MAC, IP ou noms DNS devant être sélectionnés, ou au contraire exclus, peuvent être prédéterminés ou configurés par un utilisateur. Un autre critère peut être utilisé. Ainsi, un dispositif électronique connecté au point d'accès Wi-Fi 200 peut émettre à destination de celui-ci un message prédéterminé, le message prédéterminé permettant au point d'accès Wi-Fi 200 de sélectionner ledit dispositif électronique lors de la réalisation du procédé 300. Ainsi, certains dispositifs électroniques connectés au point d'accès Wi-Fi peuvent être dédiés à la réalisation du procédé 300.

Dans une étape suivante 315, le point d'accès Wi-Fi 200 s'assure que les étapes du procédé 300 ci-après sont bien réalisées pour tous les dispositifs électroniques sélectionnés lors de l'étape 310. Pour chaque dispositif électronique sélectionné, le point d'accès Wi-Fi 200 passe ensuite à l'étape 320 ou 325 selon le mode de réalisation de l'invention, l'étape 320 étant optionnelle. Une fois que tous les dispositifs électroniques sélectionnés ont été testés, alors le point d'accès Wi-Fi 200 passe à l'étape 355. Dit autrement, au moins une valeur minimale de puissance d'émission du point d'accès Wi-Fi 200 permettant de garantir la tenue de la valeur minimale de l'indicateur de qualité, associé à sa connexion au point d'accès Wi-Fi 200, déterminée lors de l'étape 305, a été déterminée pour chaque dispositif électronique sélectionné, et possiblement pour chaque position dudit dispositif électronique. Possiblement, comme expliqué ci-après dans la description des étapes 320 et 350, le point d'accès Wi-Fi 200 peut déterminer plusieurs valeurs minimales de puissance d'émission du point d'accès Wi-Fi 200 permettant de garantir la tenue de la valeur minimale de l'indicateur de qualité pour un dispositif électronique, chaque valeur correspondant à une position, ou localisation, différente de ce même dispositif électronique. Chaque test permettant de déterminer la valeur de l'indicateur de qualité est donc réalisé successivement, selon la position du dispositif électronique.

Les étapes 320, 325, 330, 335, 340, 345 et 350 sont réalisées successivement par le point d'accès Wi-Fi 200 pour chacun des dispositifs électroniques sélectionnés lors de l'étape 310. La description ci-après s'applique donc à chaque dispositif électronique sélectionné successivement.

Dans l'étape suivante, optionnelle, 320, le point d'accès Wi-Fi 200 détermine une position du dispositif électronique. Cette position peut être déterminée par le seul point d'accès Wi-Fi, par exemple en fonction de la puissance reçue du signal radio en provenance du dispositif électronique et de la directivité dudit signal. La position peut aussi être déterminée en fonction d'un message reçu du dispositif électronique, le message comprenant typiquement des coordonnées GPS (« Global Positioning System » en anglais) du dispositif électronique. Selon un mode de réalisation complémentaire de l'invention, la position du dispositif électronique peut être déterminée par triangulation, plusieurs points d'accès pouvant alors coopérer pour déterminer la position de chaque dispositif électronique. Selon un mode de réalisation de l'invention, le dispositif électronique exécute une application permettant à un utilisateur du dispositif électronique d'indiquer ou valider une position du dispositif électronique.

Dans l'étape suivante 325, le point d'accès Wi-Fi 200 configure la puissance d'émission dudit point d'accès Wi-Fi 200 à une valeur de puissance d'émission actuelle, la valeur de puissance d'émission actuelle étant égale à une valeur de puissance d'émission maximale dudit point d'accès Wi-Fi 200. Dit autrement, dans cette étape 325, le point d'accès Wi-Fi 200 configure sa puissance d'émission à sa valeur maximale.

Dans l'étape suivante 330, le point d'accès Wi-Fi 200 détermine, pour le dispositif électronique connecté, une valeur de l'indicateur de qualité associé à sa connexion au point d'accès Wi-Fi 200. Selon le mode de réalisation de l'invention, l'indicateur de qualité peut être déterminé en fonction d'un paramètre technique associé à la connexion entre le dispositif électronique et le point d'accès Wi-Fi 200 ou bien peut nécessiter la réalisation d'un test de la connexion. Par exemple, le point d'accès Wi-Fi 200 peut réaliser un test de débit de données de la connexion établie entre le dispositif électronique et le point d'accès Wi-Fi 200. Pour réaliser ce test, il peut être nécessaire d'installer préalablement sur le dispositif électronique une application, par exemple téléchargée sur un magasin d'applications type « Google Play^{™} ». Cette application peut être la même que l'application permettant de déclencher le procédé 300 décrit lors de l'étape 301. Selon un mode de réalisation de l'invention, il est possible de réaliser un test de débit de la connexion sans devoir installer une quelconque application spécifique sur le dispositif électronique. Ainsi, le point d'accès Wi-Fi 200 peut envoyer une pluralité de trame via le protocole UDP (« User Datagram Protocol » en anglais, tel que défini par le RFC 768). Chaque trame UDP étant acquittée par le dispositif électronique, le point d'accès Wi-Fi 200 peut compter le nombre d'acquittements reçus dans un temps donné pour estimer le débit de la connexion. L'estimation du débit de la connexion par le point d'accès Wi-Fi 200 est alors réalisée en fonction du nombre d'acquittements reçus dans un temps donné et de la taille de chaque trame UDP envoyée. Selon un mode de réalisation complémentaire de l'invention, le point d'accès Wi-Fi 200 peut réaliser le test de débit de la connexion au moyen d'un outil tel « iPerf » (outil téléchargeable sur https://iperf.fr/). Cet outil peut ainsi fonctionner en mode « client-serveur » si un client (c'est-à-dire une application cliente « iPerf ») est installée sur le dispositif électronique, ou bien sinon selon le mode précédemment décrit via l'utilisation de trames UDP si aucun client n'est installé sur le dispositif électronique. A l'issue de l'étape 330, le point d'accès Wi-Fi 200 a ainsi déterminé une valeur de l'indicateur de qualité associé à la connexion du point d'accès Wi-Fi 200 avec un dispositif électronique, et potentiellement aussi associé à la position du dispositif électronique.

Dans une étape suivante 335, le point d'accès Wi-Fi 200 compare cette valeur de l'indicateur de qualité déterminée lors de cette étape précédente 330 avec la valeur minimale de l'indicateur de qualité déterminée lors de l'étape 305. Si la valeur de l'indicateur de qualité déterminée lors de l'étape 330 est supérieure à la valeur minimale déterminée lors de l'étape 305, cela signifie que la puissance d'émission actuelle du point d'accès Wi-Fi 200 est suffisante pour assurer la qualité de connexion demandée. Dans ce cas, dans une étape 340, le point d'accès Wi-Fi 200 configure la puissance d'émission actuelle du point d'accès Wi-Fi 200 en la diminuant d'une valeur prédéterminée, puis recommence le test de l'étape 330. Dit autrement, si la puissance d'émission actuelle permet d'assurer une valeur de l'indicateur de qualité déterminée lors de l'étape 330 supérieure à la valeur minimale déterminée lors de l'étape 305, alors le point d'accès Wi-Fi 200 réduit sa valeur d'émission actuelle d'une puissance prédéterminée, dite « deltaP », et recommence le test de l'étape 330. Ainsi, en baissant incrémentalement sa puissance d'émission actuelle, le point d'accès Wi-Fi 200 peut déterminer jusqu'à quelle valeur il est possible de réduire la puissance d'émission tout en assurant la tenue de la valeur minimale de l'indicateur de qualité.

Après chaque test 330 réalisé, le point d'accès Wi-Fi 200 vérifie ainsi si la valeur de l'indicateur de qualité déterminée lors de l'étape 330 est supérieure à la valeur minimale déterminée lors de l'étape 305. Dans le cas où si la valeur de l'indicateur de qualité déterminée lors de l'étape 330 devient inférieure à la valeur minimale déterminée lors de l'étape 305, alors la puissance d'émission actuelle, utilisée lors du dernier test 330, ne permet plus de garantir la tenue de l'indicateur de qualité. Le point d'accès Wi-Fi 200 passe alors à l'étape 345, pour enregistrer la valeur de la puissance d'émission minimale, dite « Pmin », permettant, pour le dispositif électronique testé, et potentiellement en association avec sa position actuelle, de tenir la valeur de l'indicateur de qualité. Cette valeur Pmin est typiquement égale à la puissance d'émission actuelle augmentée de la valeur prédéterminée deltaP, puisque le dernier test de l'étape 330 réalisé, avec la puissance actuelle, a échoué. Il est donc nécessaire de choisir comme puissance minimale la puissance actuelle correspondant à l'avant dernier test de l'étape 330. Lors de l'étape 345, le point d'accès Wi-Fi 200 enregistre, pour chaque dispositif électronique sélectionné puis testé, et possiblement pour chaque position dudit dispositif électronique, une valeur minimale de puissance d'émission permettant de garantir la tenue de l'indicateur de qualité.

Lors de l'étape suivante 350, le point d'accès Wi-Fi vérifie s'il est nécessaire, pour le dispositif électronique sélectionné, de conduire des tests pour plusieurs positions de ce dispositif électronique. Si oui, alors le point d'accès Wi-Fi 200 recommence les étapes 320, 325, 330, 335, 340 et 345 pour une nouvelle position du dispositif électronique. Si non, alors le point d'accès Wi-Fi 200 passe à l'étape 315 et sélectionne un autre dispositif électronique de la liste des dispositifs électroniques sélectionnés pour conduire, sur ce nouvel dispositif électronique sélectionné, les étapes 320, 325, 330, 335, 340 et 345.

Si, lors de l'étape 315, le point d'accès Wi-Fi 200 constate que les dispositifs électroniques sélectionnés lors de l'étape 310 ont été testés, potentiellement certains sur plusieurs positions, alors le point d'accès Wi-Fi 200 passe à l'étape 355. Lors de l'étape 355, le point d'accès Wi-Fi 200 détermine une puissance minimale d'émission du point d'accès Wi-Fi 200 permettant de garantir, pour tous les dispositifs électroniques sélectionnés, et pour possiblement chaque position de ces dispositifs électroniques, que la valeur l'indicateur de qualité est supérieure à la valeur minimale de l'indicateur de qualité souhaitée, c'est-à-dire déterminée lors de l'étape 305. Cette valeur minimale de la puissance d'émission du point d'accès Wi-Fi 200 est égale à la plus grande de toutes les valeurs minimales de puissance d'émission enregistrées lors de l'étape 345. Dit autrement, la puissance minimale d'émission du point d'accès Wi-Fi 200 permettant de garantir la tenue de la valeur de l'indicateur de qualité, pour toutes les connexions des dispositifs électroniques, possiblement à chaque position, est égale à la valeur maximale des valeurs de puissance minimale enregistrées lors de l'étape 345.

Dans une étape suivante 360, le point d'accès Wi-Fi 200 configure la puissance d'émission optimale du point d'accès Wi-Fi 200 comme étant égale à la valeur minimale de puissance d'émission déterminée lors de l'étape précédente 355. Ainsi, en configurant sa puissance d'émission à cette valeur minimale, le point d'accès Wi-Fi 200 garantit que toutes les connexions vers les dispositifs électroniques sélectionnés permettent une tenue de l'indicateur de qualité et en même temps que la puissance d'émission du point d'accès Wi-Fi a bien été réduite au minimum. Cela permet de réduire la puissance d'émission du point d'accès Wi-Fi 200, avec les bénéfices suivants :
- une qualité de service minimale préservée, telle que configurée lors de l'étape 305,
- une réduction de la puissance émise, par conséquent de la consommation électrique du point d'accès Wi-Fi 200,
- une réduction des possibles interférences causées par le point d'accès Wi-Fi 200 (réduction des interférences 130 de la Fig.1),
- une réduction globale des rayonnements électromagnétiques.

Lors d'une étape 365, le point d'accès Wi-Fi vérifie s'il doit recommencer l'exécution du procédé 300 ou bien y mettre fin (étape 370). Le procédé 300 peut ainsi être configuré pour être reproduit périodiquement. Le procédé 300 peut alternativement être configuré après détection d'un évènement particulier ou après réception d'un message comprenant une commande d'exécution du procédé 300.

Selon un mode de réalisation complémentaire de l'invention, le procédé 300 peut être exécuté de façon parallèle par plusieurs points d'accès Wi-Fi, tels par exemple les point d'accès Wi-Fi AP1 110 et AP2 120. Dans ce cas, des mécanismes de synchronisation peuvent être mis en place entre les points d'accès Wi-Fi. Typiquement, lorsqu'un point d'accès Wi-Fi exécute le procédé 300, celui-ci peut envoyer un message à destination des autres points d'accès Wi-Fi afin de les prévenir de l'exécution du procédé 300. Selon un mode de réalisation de l'invention, un point d'accès Wi-Fi peut intégrer dans un message de type « beacon » (en anglais, tel que défini dans la norme 802.11), diffusé par ledit point d'accès Wi-Fi, une information à destination des autres points d'accès Wi-Fi. L'information, possiblement intégrées dans un champ dit « vendor spécifié » d'un message de type « beacon », peut informer du début et/ou de la fin de l'exécution du procédé 300. Dans ce cas, tout point d'accès Wi-Fi recevant cette information, par exemple via un message de type « beacon », attend de recevoir un message indiquant la fin de l'exécution du procédé 300 avant de possiblement exécuter à son tour le procédé. Le mécanisme de synchronisation peut prévoir l'échange d'un « jeton» (« token » en anglais) afin de gérer l'ordonnancement de l'exécution du procédé 300 entre les différents points d'accès Wi-Fi.

Selon un mode de réalisation complémentaire de l'invention, un dispositif électronique particulier dit « tag » est adapté à la mise en œuvre, par un point d'accès Wi-Fi, du procédé 300. Le dispositif électronique ou « tag » est ainsi adapté pour :
- se connecter de façon automatique à un réseau sans fil, identifié par exemple par un SSID, prédéterminé d'un point d'accès Wi-Fi, établissant ainsi une connexion avec ledit point d'accès Wi-Fi,
- envoyer un message audit point d'accès Wi-Fi, le message identifiant le dispositif électronique comme étant un « tag »,
- envoyer un message au point d'accès Wi-Fi comprenant une commande d'exécution du procédé 300, automatiquement, périodiquement ou sur détection d'un événement.

Selon un mode de réalisation complémentaire, le dispositif électronique ou « tag » peut collecter des informations de type puissance reçue en provenance d'autres dispositifs électroniques connectés au même réseau sans fil ou à un autre réseau sans fil. Le procédé 300 peut être modifié afin que l'étape 330 de test de la valeur de l'indicateur de qualité soit réalisée par le dispositif électronique dit « tag » plutôt que par le point d'accès Wi-Fi exécutant le procédé 300. Le dispositif électronique dit « tag » et le point d'accès Wi-Fi peuvent ainsi coopérer pour déporter la mesure d'un indicateur de qualité sur le dispositif électronique dit « tag » plutôt que sur le point d'accès Wi-Fi. Le dispositif électronique dit « tag » peut possiblement se connecter sur un ou plusieurs réseaux sans fils (chaque réseau sans fil étant identifié par un SSID) afin de lancer l'exécution du procédé 300 de gestion de la puissance d'émission optimale de chaque point d'accès Wi-Fi.

## Revendications

1. Procédé (300) de gestion d'une puissance d'émission optimale d'un point d'accès Wi-Fi auquel sont connectés une pluralité de dispositifs électroniques, au moins un dispositif électronique étant associé à une pluralité de positions, le point d'accès Wi-Fi pouvant émettre avec une puissance d'émission variable, le procédé étant exécuté par le point d'accès Wi-Fi et comprenant les étapes de :
- déterminer (305) une valeur minimale d'un indicateur de qualité associé à une connexion pour chaque dispositif électronique au point d'accès Wi-Fi,
- pour chaque position associée à chaque dispositif électronique, déterminer (355) une valeur minimale de puissance d'émission du point d'accès permettant d'obtenir, pour le dispositif électronique connecté au point d'accès Wi-Fi, une valeur de l'indicateur de qualité associé à sa connexion au point d'accès Wi-Fi supérieure à la valeur minimale,
- configurer (345, 360) la puissance d'émission optimale du point d'accès Wi-Fi comme étant égale à la valeur maximale des valeurs minimales de puissance d'émission précédemment déterminées.

2. Procédé selon la revendication précédente, le procédé comprenant une étape ultérieure de :
déterminer une valeur maximale de la puissance d'émission parmi la pluralité de valeurs minimales déterminées, cette valeur maximale permettant alors d'obtenir, pour chaque dispositif électronique connecté au point d'accès Wi-Fi, une valeur de l'indicateur de qualité associé à sa connexion au point d'accès Wi-Fi supérieure à la valeur minimale, la puissance d'émission optimale du point d'accès Wi-Fi étant égale à la valeur maximale de puissance d'émission déterminée.

3. Procédé selon la revendication précédente, le procédé comprenant une étape de sélection, parmi la pluralité des dispositifs électroniques, des dispositifs électroniques pour lesquels les étapes du procédé sont exécutées.

4. Procédé selon l'une des revendications précédentes, l'étape de déterminer la valeur minimale de puissance d'émission comprenant les étapes de :
- configurer la puissance d'émission du point d'accès Wi-Fi à une valeur de puissance d'émission actuelle, la valeur de puissance d'émission actuelle étant égale à une valeur de puissance d'émission maximale du point d'accès,
- déterminer, pour au moins le dispositif électronique connecté au point d'accès Wi-Fi, une valeur de l'indicateur de qualité associé à sa connexion au point d'accès Wi-Fi,
- si la valeur de l'indicateur de qualité déterminée est supérieure à la valeur minimale de l'indicateur de qualité déterminée précédemment, alors configurer la puissance d'émission actuelle du point d'accès Wi-Fi en la diminuant d'une valeur prédéterminée et retourner à l'étape précédente afin de déterminer une nouvelle valeur de l'indicateur de qualité,
- sinon, si la valeur de l'indicateur de qualité déterminée est inférieure à la valeur minimale de l'indicateur de qualité déterminée précédemment, alors déterminer la valeur minimale de puissance d'émission du point d'accès Wi-Fi comme étant égale à la puissance d'émission actuelle augmentée de la valeur prédéterminée.

5. Point d'accès Wi-Fi (110, 120, 200) adapté pour déterminer une puissance d'émission optimale. le point d'accès Wi-Fi pouvant émettre avec une puissance d'émission variable, une pluralité de dispositifs électroniques (111, 112, 121) étant connectés au point d'accès Wi-Fi, au moins un dispositif électronique étant associé à une pluralité de positions, le point d'accès Wi-Fi étant adapté pour :
- déterminer une valeur minimale d'un indicateur de qualité associé à une connexion pour chaque dispositif électronique au point d'accès Wi-Fi,
- pour chaque position associée à chaque dispositif électronique, déterminer une valeur minimale de puissance d'émission du point d'accès permettant d'obtenir, pour le dispositif électronique connecté au point d'accès Wi-Fi, une valeur de l'indicateur de qualité associé à sa connexion au point d'accès Wi-Fi supérieure à la valeur minimale,
- configurer la puissance d'émission optimale du point d'accès Wi-Fi comme étant égale à la valeur maximale des valeurs minimales de puissance d'émission déterminées.

6. Point d'accès Wi-Fi selon la revendication précédente, une pluralité de dispositifs électroniques étant connectée au point d'accès Wi-Fi, le point d'accès Wi-Fi étant adapté pour :
- déterminer une valeur minimale de puissance d'émission du point d'accès pour chaque dispositif électronique,
- déterminer une valeur maximale de la puissance d'émission parmi la pluralité de valeurs minimales déterminées, cette valeur maximale permettant alors d'obtenir, pour chaque dispositif électronique connecté au point d'accès Wi-Fi, une valeur de l'indicateur de qualité associé à sa connexion au point d'accès Wi-Fi supérieure à la valeur minimale, la puissance d'émission optimale du point d'accès Wi-Fi étant égale à la valeur maximale de puissance d'émission déterminée.

7. Point d'accès Wi-Fi selon la revendication précédente, le point d'accès Wi-Fi étant adapté, afin de déterminer la valeur minimale de puissance d'émission, pour :
- configurer la puissance d'émission à une valeur de puissance d'émission actuelle, la valeur de puissance d'émission actuelle étant égale à une valeur de puissance d'émission maximale du point d'accès,
- déterminer, pour au moins le dispositif électronique connecté, une valeur de l'indicateur de qualité associé à sa connexion au point d'accès Wi-Fi,
- si la valeur de l'indicateur de qualité déterminée est supérieure à la valeur minimale de l'indicateur de qualité déterminée précédemment, alors configurer la puissance d'émission actuelle en la diminuant d'une valeur prédéterminée et retourner à l'étape précédente afin de déterminer une nouvelle valeur de l'indicateur de qualité,
- sinon, si la valeur de l'indicateur de qualité déterminée est inférieure à la valeur minimale de l'indicateur de qualité déterminée précédemment, alors déterminer la valeur minimale de puissance d'émission comme étant égale à la puissance d'émission actuelle augmentée de la valeur prédéterminée.

8. Programme d'ordinateur, **caractérisé en ce qu'**il comprend des instructions pour mettre en œuvre, par un processeur d'un point d'accès Wi-Fi, un procédé de gestion d'une puissance d'émission optimale du point d'accès Wi-Fi selon l'une des revendications 1 à 4, lorsque le programme d'ordinateur est exécuté par le processeur.

9. Support d'enregistrement sur lequel est stocké le programme d'ordinateur selon la revendication précédente.

## Patentansprüche

1. Verfahren (300) zur Verwaltung einer optimalen Sendeleistung eines Wi-Fi-Zugangspunktes, mit dem eine Vielzahl elektronischer Vorrichtungen verbunden ist, wobei mindestens eine elektronische Vorrichtung einer Vielzahl von Positionen zugeordnet ist, der Wi-Fi-Zugangspunkt mit einer variablen Sendeleistung senden kann und das Verfahren durch den Wi-Fi-Zugangspunkt ausgeführt wird und folgende Schritte umfasst:
- Bestimmen (305) eines Mindestwertes eines Qualitätsindikators zu einer Verbindung für jede elektronische Vorrichtung am Wi-Fi-Zugangspunkt,
- für jede Position, die jeder elektronischen Vorrichtung zugeordnet ist, Bestimmen (355) eines Mindestwertes der Sendeleistung des Zugangspunktes, die es ermöglicht, für die mit dem Wi-Fi-Zugangspunkt verbundene Vorrichtung einen Qualitätsindikatorwert zu ihrer Verbindung mit dem Wi-Fi-Zugangspunkt zu erhalten, der größer als der Mindestwert ist,
- Konfigurieren (345, 360) der optimalen Sendeleistung des Wi-Fi-Zugangspunktes, so dass er gleich dem Höchstwert der zuvor bestimmten Mindestwerte der Sendeleistung ist.

2. Verfahren nach dem vorhergehenden Anspruch, wobei das Verfahren einen späteren folgenden Schritt umfasst:
Bestimmen eines Höchstwertes der Sendeleistung unter der Vielzahl bestimmter Mindestwerte, wobei dieser Höchstwert es dann ermöglicht, für jede mit dem Wi-Fi-Zugangspunkt verbundene elektronische Vorrichtung einen Qualitätsindikatorwert zu ihrer Verbindung mit dem Wi-Fi-Zugangspunkt zu erhalten, der größer als der Mindestwert ist, wobei die optimale Sendeleistung des Wi-Fi-Zugangspunktes gleich dem bestimmten Höchstwert der Sendeleistung ist.

3. Verfahren nach dem vorhergehenden Anspruch, wobei das Verfahren einen Schritt des Auswählens elektronischer Vorrichtungen unter der Vielzahl elektronischer Vorrichtung umfasst, für die die Schritte des Verfahrens ausgeführt werden.

4. Verfahren nach einem der vorhergehenden Ansprüche, wobei der Schritt des Bestimmens des Mindestwertes der Sendeleistung die folgenden Schritte umfasst:
- Konfigurieren der Sendeleistung des Wi-Fi-Zugangspunktes auf einen aktuellen Wert der Sendeleistung, wobei der aktuelle Wert der Sendeleistung gleich einem Höchstwert der Sendeleistung des Zugangspunktes ist,
- Bestimmen eines Qualitätsindikatorwertes zu ihrer Verbindung mit dem Wi-Fi-Zugangspunkt für mindestens eine mit dem Wi-Fi-Zugangspunkt verbundene elektronische Vorrichtung,
- wenn der bestimmte Qualitätsindikatorwert größer als der zuvor bestimmte Mindestwert des Qualitätsindikators ist, dann Konfigurieren der aktuellen Sendeleistung des Wi-Fi-Zugangspunktes, indem sie um einen vorbestimmten Wert abgesenkt wird, und Zurückkehren zum vorhergehenden Schritt, um einen neuen Qualitätsindikatorwert zu bestimmen,
- wenn andernfalls der bestimmte Qualitätsindikatorwert kleiner als der zuvor bestimmte Mindestwert des Qualitätsindikators ist, dann Bestimmen des Mindestwertes der Sendeleistung des Wi-Fi-Zugangspunktes, so dass er gleich der aktuellen Sendeleistung ist, erhöht um den vorbestimmten Wert.

5. Wi-Fi-Zugangspunkt (110, 120, 200), der dazu geeignet ist, eine optimale Sendeleistung zu bestimmen, wobei der Wi-Fi-Zugangspunkt mit einer variablen Sendeleistung senden kann, eine Vielzahl elektronischer Vorrichtungen (111, 112, 121) mit dem Wi-Fi-Zugangspunkt verbunden ist, mindestens eine elektronische Vorrichtung einer Vielzahl von Positionen zugeordnet ist und der Wi-Fi-Zugangspunkt für Folgendes geeignet ist:
- Bestimmen eines Mindestwertes eines Qualitätsindikators zu einer Verbindung für jede elektronische Vorrichtung am Wi-Fi-Zugangspunkt,
- für jede Position, die jeder elektronischen Vorrichtung zugeordnet ist, Bestimmen eines Mindestwertes der Sendeleistung des Zugangspunktes, die es ermöglicht, für die mit dem Wi-Fi-Zugangspunkt verbundene Vorrichtung einen Qualitätsindikatorwert zu ihrer Verbindung mit dem Wi-Fi-Zugangspunkt zu erhalten, der größer als der Mindestwert ist,
- Konfigurieren der optimalen Sendeleistung des Wi-Fi-Zugangspunktes, so dass sie gleich dem Höchstwert der zuvor bestimmten Mindestwerte der Sendeleistung ist.

6. Wi-Fi-Zugangspunkt nach einem der vorhergehenden Ansprüche, wobei eine Vielzahl elektronischer Vorrichtungen mit dem Wi-Fi-Zugangspunkt verbunden ist und der Wi-Fi-Zugangspunkt für Folgendes geeignet ist:
- Bestimmen eines Mindestwertes der Sendeleistung des Zugangspunktes für jede elektronische Vorrichtung,
- Bestimmen eines Höchstwertes der Sendeleistung unter der Vielzahl bestimmter Mindestwerte, wobei dieser Höchstwert es dann ermöglicht, für jede mit dem Wi-Fi-Zugangspunkt verbundene Vorrichtung einen Qualitätsindikatorwert zu ihrer Verbindung mit dem Wi-Fi-Zugangspunkt zu erhalten, der größer als der Mindestwert ist, wobei die optimale Sendeleistung des Wi-Fi-Zugangspunktes gleich dem bestimmten Höchstwert der Sendeleistung ist.

7. Wi-Fi-Zugangspunkt nach dem vorhergehenden Anspruch, wobei der Wi-Fi-Zugangspunkt zum Bestimmen des Mindestwertes der Sendeleistung für Folgendes geeignet ist:
- Konfigurieren der Sendeleistung auf einen aktuellen Wert der Sendeleistung, wobei der aktuelle Wert der Sendeleistung gleich einem Höchstwert der Sendeleistung des Zugangspunktes ist,
- Bestimmen eines Qualitätsindikatorwertes zu ihrer Verbindung mit dem Wi-Fi-Zugangspunkt für mindestens die verbundene elektronische Vorrichtung,
- wenn der bestimmte Qualitätsindikatorwert größer als der zuvor bestimmte Mindestwert des Qualitätsindikators ist, dann Konfigurieren der aktuellen Sendeleistung des Wi-Fi-Zugangspunktes, indem sie um einen vorbestimmten Wert abgesenkt wird, und Zurückkehren zum vorhergehenden Schritt, um einen neuen Qualitätsindikatorwert zu bestimmen,
- wenn andernfalls der bestimmte Qualitätsindikatorwert kleiner als der zuvor bestimmte Mindestwert des Qualitätsindikators ist, dann Bestimmen des Mindestwertes der Sendeleistung des Wi-Fi-Zugangspunktes, so dass er gleich der aktuellen Sendeleistung ist, erhöht um den vorbestimmten Wert.

8. Computerprogramm, **dadurch gekennzeichnet, dass** es Anweisungen zur Durchführung eines Verfahrens zur Verwaltung einer optimalen Sendeleistung des Wi-Fi-Zugangspunktes nach einem der Ansprüche 1 bis 4 durch einen Prozessor des Wi-Fi-Zugangspunktes umfasst, wenn das Computerprogramm durch den Prozessor ausgeführt wird.

9. Speichermedium, auf dem das Computerprogramm nach dem vorhergehenden Anspruch gespeichert ist.

## Claims

1. Method (300) for managing an optimal transmission power of a Wi-Fi access point, on which plural electronic devices are connected, at least on electronic device being associated with a plurality of positions, the Wi-Fi access point being able to transmit with a variable transmission power, the method being executed by the Wi-Fi access point and comprising the steps of:
- determining (305) a minimum value of a quality indicator associated with a connection for each electronic device to the Wi-Fi access point,
- for each position associated to each electronic device, determining (355) a minimum transmission power value of the access point making it possible to obtain, for the electronic device connected to the Wi-Fi access point, a value of the quality indicator associated with its connection to the Wi-Fi access point higher than the minimum value,
- configuring (345, 360) the optimal transmission power of the Wi-Fi access point as being equal to the minimum transmission power values previously determined.

2. Method according to the preceding claim,, the method comprising a subsequent step of:
- determining a maximum value of the transmission power from among the plurality of minimum values determined, this maximum value then making it possible to obtain, for each electronic device connected to the Wi-Fi access point, a value of the quality indicator associated with its connection to the Wi-Fi access point higher than the minimum value, the optimal transmission power of the Wi-Fi access point being equal to the maximum transmission power value determined.

3. Method according to the preceding claim, the method comprising a step of selecting, from among the plurality of electronic devices, electronic devices for which the steps of the method are performed.

4. Method according to one of the preceding claims, the step of determining the minimum transmission power value comprising the steps of:
- configuring the transmission power of the Wi-Fi access point at a current transmission power value, the current transmission power value being equal to a maximum transmission power value of the access point,
- determining, for at least the electronic device connected to the Wi-Fi access point, a value of the quality indicator associated with the connection thereof to the Wi-Fi access point,
- if the value of the quality indicator determined is higher than the minimum value of the quality indicator determined previously, then configuring the current transmission power of the Wi-Fi access point by reducing it by a predetermined value and returning to the previous step in order to determine a new value of the quality indicator,
- otherwise, if the value of the quality indicator determined is lower than the minimum value of the quality indicator determined previously, then determining the minimum transmission power value of the Wi-Fi access point as being equal to the current transmission power increased by the predetermined value.

5. Wi-Fi access point (110, 120, 200) adapted to determine an optimal transmission power, the Wi-Fi access point being able to transmit with a variable transmission power, a plurality of electronic devices (111, 112, 121) being connected to the Wi-Fi access point, at least one electronic device being associated with a plurality of positions, the Wi-Fi access point being adapted:
- to determine a minimum value of a quality indicator associated with a connection for each electronic device to the Wi-Fi access point,
- for each position associated to each electronic device, to determine a minimum transmission power value of the access point making it possible to obtain, for the electronic device connected to the Wi-Fi access point, a value of the quality indicator associated with the connection thereof to the Wi-Fi access point higher than the minimum value,
- to configure the optimal transmission power of the Wi-Fi access point as being equal to the maximum value of the minimum transmission power value determined.

6. Wi-Fi access point according to the preceding claim, a plurality of electronic devices being connected to the Wi-Fi access point, the Wi-Fi access point being adapted:
- to determine a minimum transmission power value of the access point for each electronic device,
- to determine a maximum value of the transmission power from among the plurality of minimum values determined, this maximum value then making it possible to obtain, for each electronic device connected to the Wi-Fi access point, a value of the quality indicator associated with the connection thereof to the Wi-Fi access point higher than the minimum value, the optimum transmission power of the Wi-Fi access point being equal to the maximum transmission power value determined.

7. Wi-Fi access point according to the preceding claim, the Wi-Fi access point being adapted, in order to determine the minimum transmission power value,:
- to configure the transmission power at a current transmission power value, the current transmission power value being equal to a maximum transmission power value of the access point,
- to determine, for at least the electronic device connected, a value of the quality indicator associated with the connection thereof to the Wi-Fi access point,
- if the value of the quality indicator determined is higher than the minimum value of the quality indicator determined previously, then to configure the current transmission power by reducing it by a predetermined value and returning to the previous step in order to determine a new value of the quality indicator,
- otherwise, if the value of the quality indicator determined is lower than the minimum value of the quality indicator determined previously, then to determine the minimum transmission power value as being equal to the current transmission power increased by the predetermined value.

8. Computer program, **characterised in that** it comprises instructions for implementing, by a processor of a Wi-Fi access point, a method for managing an optimal transmission power of a Wi-Fi access point according to one of claims 1 to 4, when the computer program is executed by the processor.

9. Recording medium on which the computer program according to the preceding claim is stored.
